# EUROPEAN PATENT APPLICATION

(11) **EP 4 421 624 A1**
(43) Date of publication of application: **28.08.2024**
(21) Application number: 23158150.5
(22) Date of filing: 23.02.2023
(51) Int. Cl.: G06F 8/65

(54) **METHOD OF UPDATING A SOFTWARE INSTALLED ON A SECURE ELEMENT**

(71) Applicant: STMicroelectronics International N.V., 1228 Plan-les-Ouates, Geneva (CH)
(72) Inventor: SEPE, Paolo, 80010 Quarto/Napoli (IT); TERRONE, Luigi, 84086 Roccapiemonte (IT); TRAMONTANO, Alfonso, 81100 Caserta (IT)
(74) Representative: Casalonga

(57) **Abstract**

According to one aspect, it is proposed a computer-implemented method for updating multiple executable load files in a secure element, the method comprising:
- receiving (20) at least one command for performing an update session of multiple executable load files, each executable load file being associated with an application identifier,
the method also comprising, before starting an update of an executable load file :
- checking (21, 21-2) whether this executable load file is associated with an application identifier identical to the one of an executable load file for which an update is already ongoing in this update session, and
- proceeding with the update (22, 23, 24) of the executable load file if its application identifier is new in view of the application identifier of each executable load file for which an update is already ongoing in this update session, or
- rejecting the update of this executable load file if it is associated with an application identifier identical to the one of an executable load file that has already been updated in this update session.

## Description

Implementations and embodiments of the invention relate to secure elements, and more particularly to application update on a secure element.

A secure element is a tamper-resistant platform (typically an on-chip secure microcontroller) capable of securely hosting applications and their confidential and cryptographic data (for example cryptographic keys) in accordance with rules and security requirements set by well-identified trusted authorities. The secure element can be an embedded and integrated secure element, a SIM/UICC, a smart microSD as well as a smart card.

Secure elements are an evolution of the traditional chip that resides in smart cards, which have been adapted to suit the needs of an increasingly digitalized world, such as smartphones, tablets, set top boxes, wearables, connected cars, and other internet of things (IoT) devices.

With multiple applications being stored and their processes executed within a single device, it is essential to be able to host trusted applications and their associated credentials in a secure environment. A secure environment includes authentication, identification, signatures and PIN management. These applications are needed for different consumer services and require a protected environment to operate securely.

A secure element can be configured to use Java Card. Java Card is a software technology that allows Java-based applications (applets) to be run securely on a secure element.

It is important to allow updating/upgrading software on a secure element. The reasons for upgrading software are numerous: fixing bugs, adding new features, etc. The difference between upgrading classic software and secure element software is the existence of persistent instances of software programs on the secure element. These instances are created and personalized by Service Providers with both user data and secret or sensitive data. The personalization process can sometimes be complex and expensive and ideally should not be repeated in case of software upgrades.

It is not a good solution for Service Providers to simply delete their applications (and related data), then install and personalize them again.

An application is an instance (notably a Java Card Applet instance) of an executable module after it has been installed on the secure element. Each application is identified by an application identifier. An executable module contains the executable code of a single application present within an executable load file.

An executable load file is a container of one or more application's executable code (Executable Modules). For example, an executable load file is a Java Card package.

The installation of an application creates an instance from an executable module plus possibly application data within a persistent memory. Any application instance and its related data can be removed. A secure element is intended to support multiple executable load files and multiple executable modules and as such multiple applications may co-exist on a secure element.

An executable load file may be shared and used by several Service Providers (e.g. a mobile payment application, which may be instantiated by different banks). Hence, updating an executable load file is not only (or not at all) the business of a single Service Provider, but rather is the business of the executable load file provider.

The executable load file upgrade process comprises a saving phase, a loading phase and a restore phase. The saving phase allows saving instance data of an application instance created from an old executable load file that is upgraded. This saving is performed by using an upgrade API (« Application Programming Interface »).

The old executable load file version, its application instances, and their instance data are then deleted, except for the instance data saved using the Upgrade API.

The loading phase allows loading the new executable load file version. Before loading the new executable load file version, library executable load files previously imported by and left unused after the deletion of the old executable load file version may be deleted/replaced, unrelated executable load files may be deleted/loaded, and new library executable load files may be loaded. A new library executable load file is a library executable load file imported by the new executable load file version.

The restore phase allows creating new application instances from the new executable load file version, in the same number and with the same application identifiers as previously existing application instances.

Each new application instance is permitted to restore the instance data from the previous application instance that had the same application identifier.

It is possible to upgrade more than one executable load file within the same executable load file upgrade session.

However, this upgrade process does not manage the case of an upgrade of multiple executable load files having the same application identifier. Such case is undesirable but a hacker could use it to force the secure element in an inconsistent state.

In particular, if an upgrade of multiple executable load files having the same application identifier is started, the upgrade process does not manage the load phase correctly.

More particularly, the load phase is only adapted to perform a load of only one executable load file for each application identifier. Therefore, during the loading phase, the secure element can wait to receive another executable load file that it will not receive. In this case, the secure element goes in an inconsistent state that can compromise its security.

Thus, it is not possible to conclude the upgrade process and the secure element can go in an inconsistent state. This inconsistent state can block the secure element in its waiting state for another executable load file and/or makes it possible for a hacker to load a non-desired executable load file. Thus, such upgrade process presents security issues.

Therefore, there is a need to provide an upgrade process that improve the security in case of an upgrade of multiple executable load files.

According to one aspect, it is proposed a computer-implemented method for updating multiple executable load files in a secure element, notably a microcontroller, the method comprising:
- receiving at least one command for performing an update session of multiple executable load files, each executable load file being associated with an application identifier,
the method also comprising, before starting an update of an executable load file :
- checking whether this executable load file is associated with an application identifier identical to the one of an executable load file for which an update is already ongoing in this update session, and
- proceeding with the update of the executable load file if its application identifier is new in view of the application identifier of each executable load file for which an update is already ongoing in this update session, or
- rejecting the update of this executable load file if it is associated with an application identifier identical to the one of an executable load file for which an update is already ongoing in this update session.

Such method allows performing an update session of multiple executable load files and also manages the case in which the update session is started with a plurality of executable load files having the same application identifier.

Such method allows improving the security of an update session of multiple executable load files. The method allows avoiding an inconsistent state in case of an update with multiple executable load files having a same application identifier. In particular, the method allows to reject the update of an executable load file when this executable load file has the same application identifier than the one of an executable load file for which an update is already ongoing in this update session.

According to a particularly advantageous implementation, the computer-implemented method also comprises storing in a list of the memory the application identifier of an executable load file of the update session if its application identifier is new in view of the application identifier of each executable load file for which an update is already ongoing in this update session, said checking being performed by comparing the application identifier of the executable load file to each application identifier in the list.

Advantageously, said checking is performed upon receipt of said at least one command for performing the update session of multiple executable load files.

According to another aspect, it is proposed a secure element, notably a microcontroller, comprising a memory configured to store a plurality of executable load files, the secure element being configured to perform an update of multiple executable load files, the update comprising:
- receiving at least one command for performing an update session of multiple executable load files, each executable load file being associated with an application identifier,
the update also comprising, before starting an update of an executable load file :
- checking whether this executable load file is associated with an application identifier identical to the one of an executable load file for which an update is already ongoing in this update session, and
- proceeding with the update of the executable load file if its application identifier is new in view of the application identifier of each executable load file for which an update is already ongoing in this update session, or
- rejecting the update of this executable load file if it is associated with an application identifier identical to the one of an executable load file for which an update is already ongoing in this update session.

According to a particularly advantageous implementation, the update also comprises storing in a list of the memory the application identifier of an executable load file of the update session if its application identifier is new in view of the application identifier of each executable load file for which an update is already ongoing in this update session, said checking being performed by comparing the application identifier of the executable load file to each application identifier in the list.

Advantageously, said checking is performed upon receipt of said at least one command for performing the update session of multiple executable load files.

Other advantages and features of the invention will appear in the detailed description of embodiments and implementations, in no way restrictive, and the attached drawings in which:
[Fig 1]
[Fig 2]

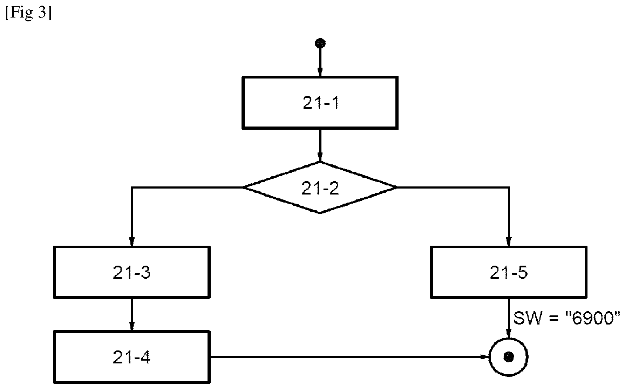

[Fig 3] schematically illustrate various implementations and embodiments of the invention.

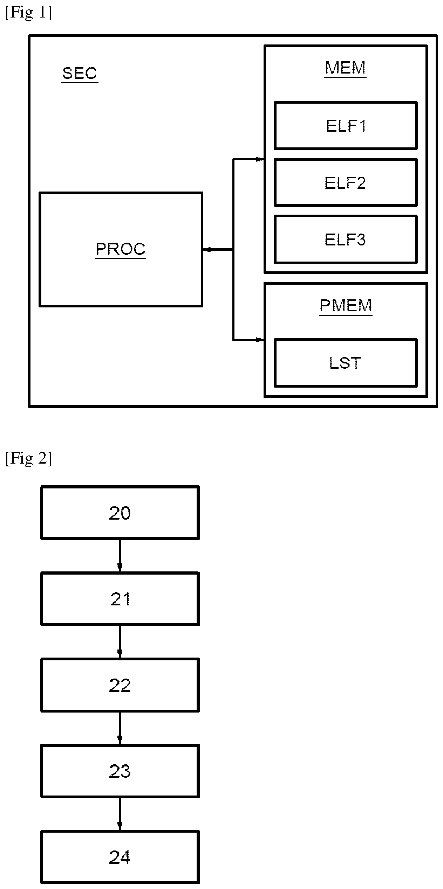

Figure 1 illustrates a secure element SE. The secure element SE is a microcontroller for example. The secure element SE can be an embedded and integrated secure element, a SIM/UICC, a smart microSD as well as smart cards. The secure element SE comprises a processing unit UT and a memory MEM. This memory MEM is configured to store different applications that can be executed by the processing unit. An application is an instance (notably a Java Card Applet instance) of an executable module after it has been installed. Each application is identified by an application identifier. An executable module contains the executable code of a single application present within an executable load file.

In particular, the secure element SE comprises at least one executable load file stored in the memory MEM. An executable load file is a container of one or more application's executable code (Executable Modules). Multiple executable load files can be stored in the memory. For example, an executable load file is a Java Card package. Here the secure element comprises three executable load files ELF1, ELF2, ELF3.

The secure element SE is also configured to implement a method for updating multiple executable load files stored in its memory MEM.

In the following executable load files being upgraded are referred to as the "old executable load file version" and the executable load file upgrading the old executable load file version are referred to as the "new executable load file version".

Figure 2 illustrates an implementation of method of updating multiple executable load files on a secure element SE. This method is implemented by the secure element SE.

The method comprises receiving 20 at least one command for starting an upgrade session of multiple executable load file. For example, the command can be a MANAGE ELF UPGRADE [start] command, as defined in the document "executable load file Upgrade - Card Specification v2.3 - Amendment H - Version 1.1" published in March 2018 from GlobalPlatform.

Such command is received via a secure channel. A secure channel is a communication mechanism between an external entity and the secure element SE. The secure channel is configured to provide a level of assurance.

More particularly, to update multiple executable load file within the same update session, the method starts with the reception of multiple MANAGE ELF UPGRADE [start] commands. Each MANAGE ELF UPGRADE [start] command specifies an executable load file that shall be upgraded.

Upon receipt of each MANAGE ELF UPGRADE [start] command, the method comprises a step 21 of performing preliminary checks. The preliminary checks are performed for each of executable load file associated with a MANAGE ELF UPGRADE [start] command of the update session.

In particular, the preliminary checks are used to accept or reject an executable load file upgrade process.

In particular, the preliminary checks allow rejecting an executable load file upgrade process if an executable load file upgrade process is already ongoing.

The preliminary checks also allow rejecting an executable load file upgrade process if the command specifies a minimum version number and if the version number of the old executable load file version being upgraded is lower than the specified minimum.

The preliminary checks also allow rejecting an executable load file upgrade process if static dependencies exist on the secure element SE that would prevent the old executable load file version from being deleted (notably according to Java Card rules).

The preliminary checks also allow rejecting an executable load file upgrade process if any application instance created from the old executable load file version is currently selected (on any logical channel) or suspended.

The preliminary checks also allow rejecting an executable load file upgrade process if the new executable load file version is already present on the secure element SE (i.e., with an application identifier other than the old executable load file version) and the new executable load file version does not conform to some requirements. In particular, the requirements are that each new executable load file version shall be associated with a same security domain as the old executable load file version, and that each new executable load file version shall define at least the same application modules as the old executable load file version, with the exact same application identifiers.

The preliminary checks also allow rejecting an executable load file upgrade process if the new executable load file version is already present on the secure element SE (i.e., with an application identifier other than the old executable load file version) and application instances have already been created from the new executable load file version.

The preliminary checks also comprise an additional check illustrated on Figure 3. This additional check allows identifying whether the application identifier of the executable load file associated with a received MANAGE ELF UPGRADE [start] command is identical to an application identifier associated to an executable load file for which an update is already ongoing in the update session.

In particular, upon receipt of each MANAGE ELF UPGRADE [start] command (step 21-1 on Figure 3), the additional check comprises a comparison (step 21-2) between the application identifier of the executable load file associated with this command and the application identifier of each executable load file for which an update is already ongoing in the update session.

More particularly, the secure element comprises a persistent memory CMEM. The persistent memory CMEM is a memory that cannot be altered when the secure element is powered off. The persistent memory CMEM can be a non-volatile memory, such as a Flash memory or an Electrically-erasable programmable read-only memory ("EEPROM"). The persistent memory CMEM is used to store the application identifier of each executable load file for which an update is already ongoing in the update session. Therefore, the application identifier of the executable load file associated with the received command is compared to the application identifiers stored in a list in the persistent memory CMEM.

If the additional check allows determining that the application identifier of the executable load file differs from the application identifier of each executable load file for which an update is already ongoing, then the method comprises a step 21-3.

In this step 21-3, the secure element SE stores the application identifier of the executable load file in the list in the persistent memory CMEM. Then, the method comprises a step 21-4 in which the command for updating the executable load file is accepted. The method can continue with the update of this executable load file at step 22 on Figure 1.

If the additional check allows determining that the application identifier of the executable load file is identical to an application identifier of an executable load file for which an update is already ongoing, then the method comprises a step 21-5. In this step 21-5, the secure element SE rejects the MANAGE ELF UPGRADE [start] command of this executable load file. The rejection of this command allows avoiding the start of the update for this executable load file that could cause the secure element SE to enter in an inconsistent state that could compromise its security.

The secure element SE also generates a status word to indicate that the executable load file cannot be updated but the update of the other executable load file of the update session can be maintained. The status word can be "6900", as defined in the document "executable load file Upgrade - Card Specification v2.3 - Amendment H - Version 1.1". The generation of this status word allows avoiding to abort the update of the other executable load file of the update session.

When all the MANAGE ELF UPGRADE [start] commands have been checked, the method comprises the upgrade of each executable load file that has not been rejected.

In particular, the update of each executable load file comprises a saving phase (step 22), a loading phase (step 23) and a restore phase (step 24).

The saving phase 22 allows saving instance data of an application instance created from an old executable load file that is upgraded. This saving is performed by using an upgrade API (« Application Programming Interface »).

The old executable load file version, its application instances, and their instance data are then deleted, except for the instance data saved using the Upgrade API.

The loading phase 23 allows loading the new executable load file version. Before loading the new executable load file version, library executable load files previously imported by and left unused after the deletion of the old executable load file version may be deleted/replaced, unrelated executable load files may be deleted/loaded, and new library executable load files may be loaded. A new library executable load file is a library executable load file imported by the new executable load file version.

The restore phase 24 allows creating new application instances from the new executable load file version, in the same number and with the same application identifiers as previously existing application instances.

The saving phase, the loading phase and the restore phase can be implemented as specified in the document "executable load file Upgrade - Card Specification v2.3 - Amendment H - Version 1.1".

At the end of the upgrade session, the application identifiers that are stored in the list LST of the memory CMEM are deleted.

## Claims

1. Computer-implemented method for updating multiple executable load files in a secure element (SE), the method comprising:
- receiving (20) at least one command for performing an update session of multiple executable load files (ELF1, ELF2, ELF3), each executable load file being associated with an application identifier,
the method also comprising, before starting an update of an executable load file :
- checking (21, 21-2) whether this executable load file is associated with an application identifier identical to the one of an executable load file for which an update is already ongoing in this update session, and
- proceeding with the update (22, 23, 24) of the executable load file if its application identifier is new in view of the application identifier of each executable load file for which an update is already ongoing in this update session, or
- rejecting the update of this executable load file if it is associated with an application identifier identical to the one of an executable load file for which an update is already ongoing in this update session.

2. Computer-implemented method according to claim 1, comprising storing (21-3) in a list of the memory the application identifier of an executable load file of the update session if its application identifier is new in view of the application identifier of each executable load file for which an update is already ongoing in this update session, said checking (21, 21-1) being performed by comparing the application identifier of the executable load file to each application identifier in the list.

3. Computer-implemented method according to claim 1 or 2, in which said checking (21, 21-1) is performed upon receipt of said at least one command for performing the update session of multiple executable load files.

4. Secure element (SE) comprising a memory (MEM) configured to store a plurality of executable load files (ELF1, ELF2, ELF3), the secure element being configured to perform an update of multiple executable load files, the update comprising:
- receiving (20) at least one command for performing an update session of multiple executable load files, each executable load file being associated with an application identifier,
the update also comprising, before starting an update of an executable load file :
- checking (21, 21-2) whether this executable load file is associated with an application identifier identical to the one of an executable load file for which an update is already ongoing in this update session, and
- proceeding with the update of the executable load file if its application identifier is new in view of the application identifier of each executable load file for which an update is already ongoing in this update session, or
- rejecting the update of this executable load file if it is associated with an application identifier identical to the one of an executable load file for which an update is already ongoing in this update session.

5. Secure element according to claim 4, in which the update also comprises storing in a list of the memory the application identifier of an executable load file of the update session if its application identifier is new in view of the application identifier of each executable load file for which an update is already ongoing in this update session, said checking (21, 21-1) being performed by comparing the application identifier of the executable load file to each application identifier in the list.

6. Secure element according to claim 4 or 5, in which said checking (21, 21-1) is performed upon receipt of said at least one command for performing the update session of multiple executable load files.
